# EUROPÄISCHE PATENTSCHRIFT

(11) **EP 0 293 635 B1**
(45) Veröffentlichungstag und Bekanntmachung des Hinweises auf die Patenterteilung: **30.11.1994**
(21) Anmeldenummer: 88107388.6
(22) Anmeldetag: 07.05.1988
(51) Int. Cl.: B29D 22/00, B29C 67/22, B29C 69/00

(54) **Verfahren zur Herstellung von Verpackungen aus Schaumkunststoff**
Method for the manufacture of foam packing materials
Procédé de fabrication d'emballages en mousse

(30) Priorität: 30.05.1987 DE 3718300
(43) Veröffentlichungstag der Anmeldung: 07.12.1988
(73) Patentinhaber: LINPAC TECHNOLOGIE GmbH, D-27721 Ritterhude (DE)
(72) Erfinder: Gröne, Horst-Ditmar, D-2822 Schwanewede-Neuenkirchen (DE)
(74) Vertreter: Möller, Friedrich, Dipl.-Ing.

(56) Entgegenhaltungen:
- DE-A- 1 504 891
- DE-A- 1 704 675
- DE-A- 1 704 922
- DE-A- 2 226 596

## Beschreibung

Die Erfindung betrifft ein Verfahren zur Herstellung von Verpackungen, insbesondere faltbare Zuschnitte für Kartons, aus Schaumkunststoff gemäß dem Oberbegriff des Anspruchs 1. Ein solches Verfahren ist z.B. aus DE-A-1 704 922 bekannt.

Verpackungen der hier angesprochenen Art, nämlich vorzugsweise Faltkartons, werden üblicherweise aus Pappe (Wellpappe) hergestellt. Es ist aber auch bereits bekannt, Faltkartons aus Kunststoff zu fertigen, und zwar vorzugsweise aus Schaumkunststoff.

Die Herstellung solcher Faltkartons aus Schaumkunststoff ist in mehrfacher Hinsicht problematisch. Es besteht nämlich die Gefahr, daß beim Falten des Zuschnitts zur Bildung des Kartons an den Faltkanten Risse entstehen.

Um ein unerwünschtes Brechen der Falt- bzw. Knicklinien des Zuschnitts beim Zusammenfalten des Kartons zu vermeiden, ist es bereits bekannt, eine Materialbahn aus Schaumkunststoff oder einen daraus bereits herausgetrennten Zuschnitt mit entsprechenden Prägungen zu versehen. Die Herstellung dieser Prägungen erfolgt bisher dadurch, daß die nach dem Schäumen abgekühlte Materialbahn wieder so weit aufgewärmt wird, daß sie sich bleibend verformen läßt, d. h., die notwendigen Falt- und Knicklinien dauerhaft in das Schaumkunststoffmaterial eindrückbar sind. Abgesehen davon, daß das nachträgliche Wiederaufwärmen der Materialbahn einen zusätzlichen Aufwand darstellt, der nicht unerhebliche Energiekosten verursacht, findet eine Nachexpansion des wiederaufgewärmten Schaumkunststoffs statt, die zu unerwünschten Festigkeitsverlusten führt.

Ausgehend von dem Vorstehenden liegt der Erfindung die Aufgabe zugrunde, ein Verfahren zur Herstellung von Verpackungen bzw. zur Herstellung einer ohne Bruchgefahr leicht faltbaren Materialbahn zur Bildung derartiger Verpackungen aus Schaumkunststoff zu schaffen, welches einfach und kostengünstig durchführbar ist, und zwar ohne nennenswerte Beeinträchtigungen der Eigenschaften des Schaumkunststoffs.

Zur Lösung dieser Aufgabe weist ein Verfahren zur Herstellung von Verpackungen aus Schaumkunststoff, insbesondere faltbare Zuschnitte für Kartons, die Merkmale des Anspruchs 1 auf. Es hat sich überraschend gezeigt, daß bei der "frischen", aber bereits abgekühlten Materialbahn sich noch Prägungen vornehmen lassen, sofern diese noch das zur Herstellung der Materialbahn erforderliche Treibmittel, vorzugsweise Pentan, enthält. Aus dem so mit Falt- und Knicklinien versehenen Zuschnitt läßt sich der Faltkarton problemlos herstellen, da diese Linien eine erstaunlich gute Scharnierwirkung aufweisen, also ohne zu brechen bzw. zu reißen die einzelnen Abschnitte des Zuschnitts relativ zueinander verschwenkbar sind, obwohl der Zuschnitt aus an sich porösem Schaumkunststoff, vorzugsweise expandiertem Polystyrol, besteht. Bei einem späteren Prägen der Falt- und Knicklinien, wie es bisher erfolgt, würde ohne ein vorheriges Aufheizen ein Brechen der Knicklinien des Zuschnitts erfolgen. Dieses hängt damit zusammen, daß eine gewisse Zeit nach dem Aufschäumen des Kunststoffs sich das Treibmittel verflüchtigt. Dieses ist aber - wie es sich gezeigt hat - zum kalten Prägen des Zuschnitts erforderlich.

Zweckmäßigerweise erfolgt das Prägen der Falt- und Knicklinien unmittelbar nach dem Abkühlen des extrudierten Schaumkunststoff-Folien-Schlauchs und der daraus gebildeten Materialbahn, nämlich dann, wenn noch annähernd der gesamte Treibmittelanteil , der zum Aufschäumen des extrudierten Kunststoffschlauchs erforderlich ist, in demselben enthalten ist. Da das Treibmittel erst eine gewisse Zeit nach der Abkühlung der Materialbahn beginnt, sich zu verflüchtigen, läßt sich nach dem Abkühlen noch eine optimale Prägung vornehmen. Es hat sich auch gezeigt, daß eine Prägung bei zufriedenstellenden Ergebnissen noch möglich ist, wenn ein Teil des Treibmittels bereits aus der Materialbahn entwichen ist. Zumindest sollte beim Prägen der Anteil des Treibmittels noch 60 % betragen.

Besonders vorteilhaft arbeitet das erfindungsgemäße Verfahren, wenn gleichzeitig mit dem Prägen der Falt- bzw. Knicklinien der Zuschnitt aus dem Material herausgetrennt wird, vorzugsweise durch einen umlaufenden Prägeschnitt. Es ist auch möglich, gleichzeitig mehrere nebeneinanderliegende Zuschnitte aus der Materialbahn herauszutrennen und zu prägen. Hierdurch erfolgt eine Leistungssteigerung des erfindungsgemäßen Verfahrens.

Nach einem weiteren Vorschlag der Erfindung erfolgt das Prägen der Materialbahn und das Heraustrennen von Zuschnitten aus derselben unmittelbar nach der Bildung einer ebenen Materialbahn aus einem vorzugsweise extrudierten Materialschlauch. Dazu werden zwei aus dem Materialschlauch gebildete ebene Bahnhälften zur Materialbahn verbunden, und zwar dann, wenn noch nahezu der gesamte Treibmittelanteil in der Materialbahn vorhanden ist, also im "frischen" Zustand derselben.

Ein Ausführungsbeispiel des erfindungsgemäßen Verfahrens wird anhand der Zeichnungen näher erläutert. Es zeigt:
- Fig. 1: eine schematisch dargestellte Vorrichtung zur Durchführung des erfindungsgemäßen Verfahrens in einer Seitenansicht,
- Fig. 2: die Vorrichtung gemäß der Fig. 1 in einer Draufsicht, und
- Fig. 3: einen nach dem erfindungsgemäßen Verfahren mit der gezeigten Vorrichtung hergestellten Zuschnitt in einer Materialbahn.

Das nachfolgend beschriebene Verfahren dient zur Herstellung eines Zuschnitts 10 für Faltkartons aus einer extrudierten Materialbahn 11 aus einem Schaumkunststoff, nämlich extrudiertem Polystyrol.

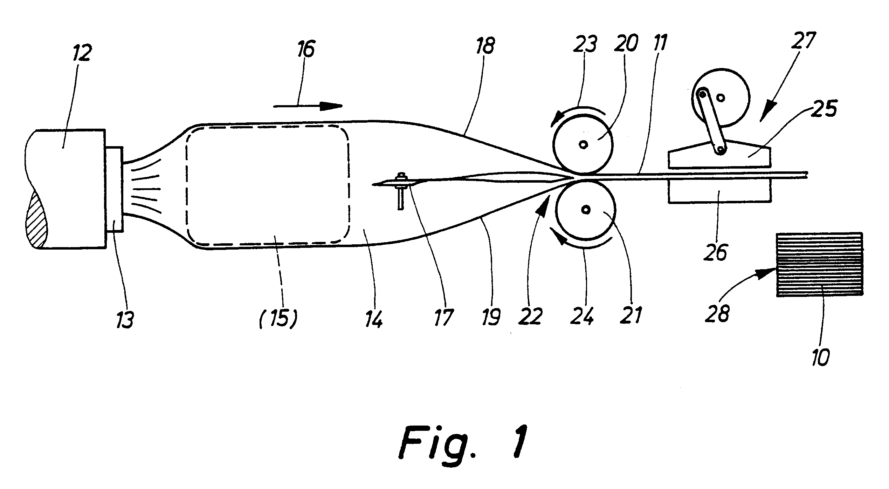

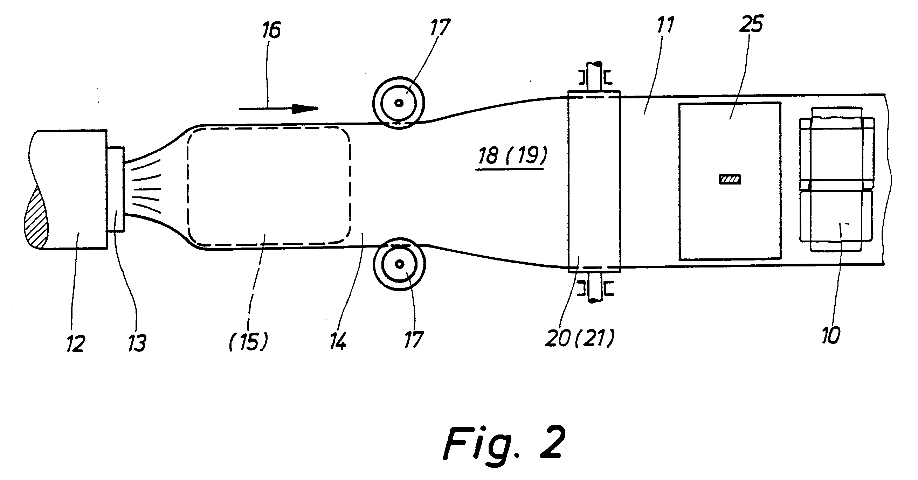

Die in den Fig. 1 und 2 dargestellte Vorrichtung dient zur Durchführung der erfindungsgemäßen Verfahrensschritte. Sie verfügt über einen Extruder 12, von dem hier nur der Bereich eines Extrudermundstücks 13 dargestellt ist. Der Extruder 12 formt einen Materialschlauch 14, der nach dem Austritt des durch ein geeignetes Treibmittel, beispielsweise Pentan, aufgeschäumten Kunststoffs (Polystyrol) expandiert, sich also in seinen Abmessungen vergrößert. Nachdem der den Extruder 12 verlassende Schaumkunststoff unter Aufweitung des Materialschlauchs 14 annähernd vollständig expandiert ist, wird dieser über einen im Inneren des Materialschlauchs 14 liegenden Kühldorn 15 gezogen, der vorzugsweise zylindrisch ausgebildet ist.

Der Materialschlauch 14 verläßt den Kühldorn 15, nachdem er soweit abgekühlt ist, daß er weiterverarbeitbar ist. Hierzu schließt unmittelbar an den Kühldorn 15 (in Extrusionsrichtung, Pfeil 16, gesehen) eine Trenneinrichtung an, die aus zwei einander gegenüberliegenden Schneidorganen, nämlich beim gezeigten Ausführungsbeispiel aus Schneidrollen 17, besteht. Die Schneidrollen 17 teilen die Materialbahn 14 etwa mittig in zwei Bahnhälften 18 und 19. Dementsprechend sind im vorliegenden Ausführungsbeispiel beide Bahnhälften 18 und 19 gleich groß und mit einer gegensinnigen, etwa halbkreisförmigen Wölbung versehen.

Im Anschluß an die Schneideinrichtung (Schneidrollen 17) verfügt die Vorrichtung über ein Rollenpaar aus zwei mit parallelen, horizontalen Drehachsen übereinanderliegenden Walzen 20 und 21, deren einander gegenüberliegende Mäntel mit geringfügigem Abstand zueinander verlaufen zur Bildung eines Walzspalts 22. Die Walzen 20 und 21 sind gegensinnig (siehe Pfeile 23 und 24) angetrieben, derart, daß sie im Walzspalt 22 die beiden Bahnhälften 18 und 19 in Extrusionsrichtung (Pfeil 16) antreiben.

Die beiden Walzen 20 und 21 dienen dazu, die Bahnhälften 18 und 19 zusammenzuführen und die (entgegengesetzt halbkreisförmige) Wölbung der Bahnhälften 18 und 19 zu beseitigen. Die zwischen den Walzen 20 und 21 zusammengeführten Bahnhälften 18 und 19 werden dadurch in eine horizontale Ebene gebracht, die zum anschließenden Prägen erforderlich ist.

Des weiteren werden im vorliegenden Ausführungsbeispiel zwischen den Walzen 20 und 21 die Bahnhälften 18 und 19 dauerhaft miteinander verbunden zur Bildung der Materialbahn 11. Dies kann in an sich bekannter Weise erfolgen.

Die den Walzspalt 22 verlassende Materialbahn 11 ist in der gewünschten Weise ebenflächig, indem die beiden Bahnhälften 18 und 19 gegensinnig vorgespannt in der Ebene der Materialbahn 11 liegen, wobei eine Zurückverformung der Bahnhälften 18 und 19 durch die dauerhafte Verbindung derselben verhindert wird.

Unmittelbar nach der Herstellung der Materialbahn 11, also noch im "frischen" Zustand derselben, d.h. mit noch nicht oder zu einem unwesentlichen Teil verflüchtigtem Treibmittel, erfolgt das Prägen und gleichzeitige Ausschneiden des Zuschnitts 10 aus der Materialbahn 11 zwischen zwei Pressenhälften 25 und 26 einer üblichen Presse, beispielsweise einer hier dargestellten Exzenterpresse 27.

Nach dem Verlassen der Exzenterpresse 27 können die aus der Materialbahn 11 herausgetrennten, fertigen Zuschnitte 10 entnommen und in einem in der Fig. 1 dargestellten Zuschnittstapel 28 gesammelt werden, bevor sie weiterverarbeitet, nämlich zu Kartons gefaltet werden.

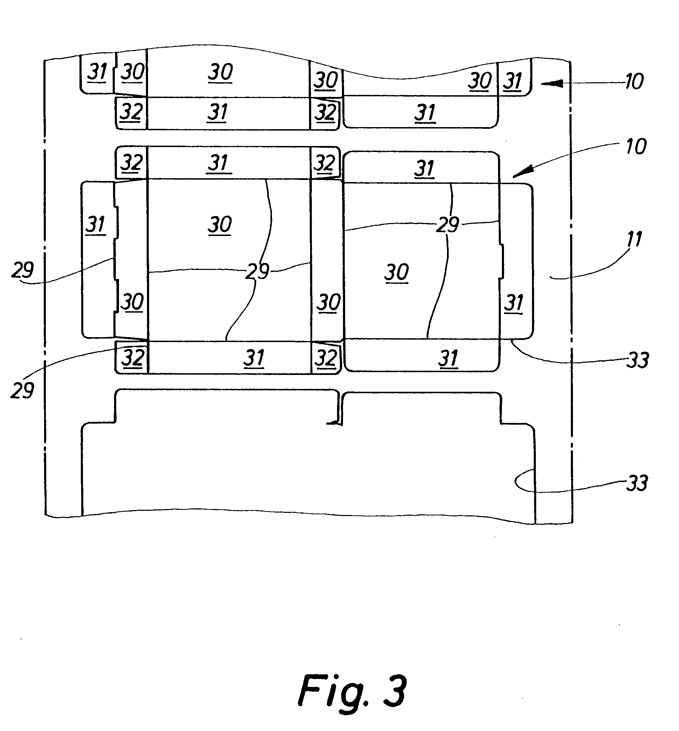

Die Fig. 3 zeigt den Zuschnitt 10, wie er beispielsweise von der Exzenterpresse 27 aus der strichpunktiert angedeuteten Materialbahn 11 diskontinuierlich herausgetrennt wird. Dazu sind die Pressenhälften 25 und 26 mit korrespondierenden Schnitt- und Prägekanten versehen, die bei jedem Preßhub einen Zuschnitt 10 herstellen. Alternativ ist es möglich, mit einem Preßhub mehrere sowohl hintereinander als nebeneinander liegende Zuschnitte 10 aus der Materialbahn 11 herauszutrennen.

Der in der Fig. 3 gezeigte Zuschnitt verfügt über Wandungen 30, Seitenlappen 31 und Ecklappen 32, die zur Herstellung eines Faltkartons erforderlich sind. Verbunden sind die Wandungen 30, Seitenlappen 31 und Ecklappen 32 untereinander durch die entsprechenden Faltlinien 29, die durch die Exzenterpresse 27 unmittelbar nach der Herstellung der Materialbahn 11, also noch im "frischem" Zustand derselben, in die Materialbahn 11 geprägt werden. Gleichzeitig erfolgt ein unlaufendes Besäumen des Zuschnitts 10, d.h. ein Heraustrennen desselben aus der Materialbahn 11 durch eine umlaufende Schnittlinie 33.

Zur Herstellung anderer Gegenstände als Zuschnitte 10 kann das vorstehend beschriebene Verfahren dahingehend abgeändert werden, daß nur ein Extrudieren, Abkühlen, Aufteilen der Bahnhälften 18 und 19 und ein dauerhaftes Verbinden derselben zwischen den Walzen 20 und 21 erfolgt, und zwar sowohl im "frischen" Zustand der Bahnhälften 18 und 19 als auch bei bereits größtenteils verflüchtigtem Treibmittel. Aus der dadurch entstehenden Materialbahn 11 können dann durch quergerichtetes Abtrennen einzelner Abschnitte ebene Platten oder andere flache Gegenstände hergestellt werden, also nicht nur Zuschnitte für Verpackungen, nämlich Kartons.

Ebenso sind nur einige der vorstehenden Verfahrensgänge notwendig, wenn der Zuschnitt 10 aus einer Materialbahn gebildet wird, die in einer anderen Weise als durch Extrusion entstanden ist. In solchen Fällen, in denen also eine unmittelbare Herstellung einer geschäumten Materialbahn auf einer geeigneten Kunststoff-Verarbeitungsmaschine erfolgt, reicht es zur Herstellung der Zuschnitte 10, wenn diese unmittelbar nach dem Abkühlen der die Kunststoff-Verarbeitungsmaschine verlassende Materialbahn 11 geprägt werden, beispielsweise durch die in den Fig. 1 und 2 gezeigte Exzenterpresse 27 oder dgl. Es ist lediglich erforderlich, das Prägen der Materialbahn 11 unmittelbar nach der Herstellung derselben durchzuführen, wenn nämlich das Treibmittel noch nahezu vollständig im Schaumkunststoff enthalten ist.

Schließlich kann eine Abwandlung des beschriebenen Verfahrens dahingehend erfolgen, daß im "frischen" Zustand der Materialbahn 11 bzw. des Schaumkunststoffs lediglich die Prägung der Faltlinien 29 des Zuschnitts 10 erfolgt. Das Ausschneiden des Zuschnitts 10 aus der Materialbahn 11 kann später erfolgen, und zwar auch dann, wenn bereits das Treibmittel größtenteils oder ganz verflüchtigt ist.

## Patentansprüche

1. Verfahren zur Herstellung von Verpackungen aus mit Treibmittel aufgeschäumten Schaumkunststoff, insbesondere faltbare Zuschnitte für Kartons, wobei eine Materialbahn (11) zur Bildung des faltbaren Zuschnitts mindestens mit Falt- bzw. Knicklinien (29) versehen wird, dadurch gekennzeichnet, daß durch Extrudieren die Materialbahn (11) gebildet wird und unmittelbar nach einem anschließenden Abkühlen der Materialbahn (11) bei noch nahezu vollständig in der Materialbahn (11) vorhandenen Treibmittel die Knick- bzw. Faltlinien (29) in die Materialbahn (11) eingeprägt werden.

2. Verfahren nach Anspruch 1, dadurch gekennzeichnet, daß die Materialbahn (11) aus einem extrudierten Schaumkunststoff-Folien-Schlauch gebildet wird.

3. Verfahren nach Anspruch 1 oder 2, dadurch gekennzeichnet, daß das Prägen bei einem im Vergleich zum Entstehen der Materialbahn (11) noch 100 - 60%igen Treibmittelanteil im Schaumkunststoff durchgeführt wird.

4. Verfahren nach einem oder mehreren der Ansprüche 1 bis 3, dadurch gekennzeichnet, daß gleichzeitig mit dem Prägen der Knick- und Faltlinien (29) wenigstens ein Zuschnitt (10) aus der Materialbahn (11) herausgetrennt wird, vorzugsweise durch einen umlaufenden Prägeschnitt (Schnittlinie 33).

5. Verfahren nach Anspruch 4, dadurch gekennzeichnet, daß mehrere nebeneinanderliegende Zuschnitte (10) zusammen aus der Materialbahn (11) herausgetrennt werden bei gleichzeitiger Bildung der Präge- und/oder Faltlinien (29) auf allen herausgetrennten Zuschnitten (10).

6. Verfahren nach Anspruch 1 sowie einem oder mehreren der weiteren Ansprüche, dadurch gekennzeichnet, daß als Schaumkunststoff geschäumtes Polystyrol verwendet wird.

7. Verfahren nach einem oder mehreren der Ansprüche 1 bis 6, dadurch gekennzeichnet, daß der abgekühlte Materialschlauch (14) etwa mittig getrennt, die so entstehenden, etwa gleich großen und gleichermaßen gegensinnig gewölbten Bahnhälften (18, 19) zusammengeführt und miteinander dauerhaft verbunden werden zur Bildung der Materialbahn (11).

8. Verfahren nach Anspruch 7, dadurch gekennzeichnet, daß unmittelbar nach dem Verbinden der Bahnhälften (18, 19) zur Materialbahn (11) die Knick- bzw. Faltlinien (29) geprägt werden und/oder wenigstens ein Zuschnitt (10) aus der Materialbahn herausgetrennt wird.

## Claims

1. Process for the production of packs from plastic foam foamed by means of an expanding agent, especially foldable blanks for cartons, a web of material (11) for forming the foldable blank being provided at least with folding or bending lines (29), characterized in that the web of material (11) is formed by extrusion and the bending or folding lines (29) are embossed in the web of material (11) immediately after a subsequent cooling of the web of material (11), when the expanding agent is still contained in it virtually completely.

2. Process according to Claim 1, characterized in that the web of material (11) is formed from an extruded plastic-foam film tube.

3. Process according to Claim 1 or 2, characterized in that the embossing is carried out when the proportion of expanding agent in the plastic foam is still 100 to 60% in comparison with the formation of the web of material (11).

4. Process according to one or more of Claims 1 to 3, characterized in that, simultaneously with the embossing of the bending and folding lines (29), at least one blank (10) is severed from the web of material (11), preferably by means of an encircling embossing cut (cutting line 33).

5. Process according to Claim 4, characterized in that several blanks (10) lying next to one another are severed together from the web of material (11), with the embossing and/or folding lines (29) being formed simultaneously on all the severed blanks (10).

6. Process according to Claim 1 and one or more of the further claims, characterized in that foamed polystyrene is used as a plastic foam.

7. Process according to one or more of Claims 1 to 6, characterized in that the cooled tube of material (14) is severed approximately centrally, and the web halves (18, 19) so obtained, which are of approximately equal size and which are curved equally and oppositely, are brought together and connected permanently to one another in order to form the web of material (11).

8. Process according to Claim 7, characterized in that immediately after the web halves (18, 19) have been connected to form the web of material (11), the bending or folding lines (29) are embossed and/or at least one blank (10) is severed from the web of material.

## Revendications

1. Procédé de préparation d'emballages à partir d'une matière synthétique qui a été moussée par un agent gonflant, en particulier de flans pliables pour des cartons, dans lequel une bande de matière (11) est, pour la formation du flan pliable, pourvue au moins de lignes de pliage et respectivement d'inflexion (29), caractérisé en ce que la bande de matière (11) est formée par extrusion et en ce que, directement après un refroidissement ultérieur de la bande de matière (11), les lignes d'inflexion et respectivement de pliage (29) sont estampées dans la bande de matière (11) lorsque l'agent gonflant est encore quasiment totalement présent dans la bande de matière (11).

2. Procédé suivant la revendication 1, caractérisé en ce que la bande de matière (11) est formée d'une boyau extrudé à base d'une feuille de matière synthétique mousse.

3. Procédé selon la revendication 1 et 2, caractérisé en ce que l'estampage est effectué dans la matière synthétique mousse à une fraction d'agent gonflant d'encore 100-60% par rapport à la formation de la bande de matière (11).

4. Procédé selon une ou plusieurs des revendications 1 à 3, caractérisé en ce que, simultanément à l'estampage des lignes d'inflexion et de pliage (29), au moins un flan (10) est séparé de la bande de matière (11), de préférence par une coupe périphérique par estampage (ligne de coupe 33).

5. Procédé selon la revendication 4, caractérisé en ce que plusieurs flans (10) situés les uns à côté des autres sont conjointement séparés de la bande de matière (11) lors d'une formation simultanée des lignes d'estampage et/ou de pliage (29) sur tous les flans (10) séparés.

6. Procédé selon la revendication 1 ainsi que suivant une ou plusieurs des autres revendications, caractérisé en ce qu'on utilise du polystyrène mousse comme matière synthétique mousse.

7. Procédé selon une ou plusieurs des revendications 1 à 6, caractérisé en ce que le boyau de matière (14) refroidi est séparé approximativement au milieu, en ce que les moitiés de bande (18, 19) ainsi formées sont approximativement identiquement grandes et sont bombées de manière uniforme en sens opposés et en ce qu'elles sont mutuellement reliées de manière durable pour la formation de la bande de matière (11).

8. Procédé selon la revendication 7, caractérisé en ce que, directement après la liaison des moitiés de bande (18, 19) pour former une bande de matière (11), les lignes d'inflexion et respectivement de pliage (29) sont estampées et/ou au moins un flan (10) est séparé de la bande de matière.
